Europäisches Patentamt

European Patent Office

Office européen des brevets

(11) Publication number: 0 489 354 A1

# EUROPEAN PATENT APPLICATION

(21) Application number: 91120340.4

(22) Date of filing: 27.11.91

(51) Int. Cl.5: B60C 9/02

(30) Priority: 04.12.90 IT 6795890
04.12.90 IT 6795990

(43) Date of publication of application:
10.06.92 Bulletin 92/24

(84) Designated Contracting States:
DE ES FR GB IT

(71) Applicant: Bridgestone Corporation
10-1, Kyobashi 1-Chome Chuo-Ku
Tokyo 104(JP)

(72) Inventor: Siegenthaler, Karl J.
Via dei Pescatori, 153
Ostia, I-00100 Roma(IT)

(74) Representative: Jorio, Paolo et al
Studio Torta, Via Viotti, 9
I-10121 Torino(IT)

(54) Motor vehicle tire.

(57) A motor vehicle tire (1) featuring a substantially U-section carcass (2) having a toroidal tubular body ply (4) extending about and encapsulating two lateral beads (8).

Fig.3

EP 0 489 354 A1

Rank Xerox (UK) Business Services

The present invention relates to a motor vehicle tire. Known tires for motor vehicles, and particularly cars, normally comprise a toroidal inner carcass of substantially U-shaped section, and an outer tread assembly comprising an outer tread and an inner reinforcing belt consisting of at least one tread ply. On known tires of the aforementioned type, the carcass normally comprises an annular layer consisting of a body ply, an innerliner covering the inner surface of the body ply, and two abrasion strips and sidewalls covering lateral inner surface portions of the body ply. The carcass also comprises two beads, each enclosed inside a respective lateral wall of the carcass by turning a respective lateral end of the outer layer up around the bead.

Despite considerable improvements in recent times in terms of internal structure, materials and manufacturing equipment and processes, known tires of the aforementioned type still present a number of drawbacks as regards internal structure and the operations required for manufacturing the same.

Foremost of these is the fact that, on the above carcass, turning up the innerliner and body ply for enclosing the beads is an extremely delicate operation which, if performed carelessly, results in relatively severe twisting of the beads, thus resulting in distortion of the same and impaired uniformity of the finished tire.

The aim of the present invention is to provide a motor vehicle tire featuring a perfected carcass designed to substantially prevent the beads from being subjected to forces capable of distorting them during manufacture of the carcass.

According to the present invention, there is provided a motor vehicle tire comprising a substantially U-section inner carcass, an outer tread and a tread belt, said carcass comprising a toroidal body ply and two annular lateral beads; characterized by the fact that said toroidal body ply is tubular and preferably continuous, i.e. having no joints, and said beads are enclosed inside said tubular body ply.

According to a preferred embodiment of the invention set forth above, the tread presents a curved section, said tread belt being located between a central portion of said tread and a central portion of said tubular body ply.

According to a further preferred embodiment of the invention set forth above, the tread belt is enclosed inside said body ply together with said beads.

The invention will now be described by way of examples with reference to the accompanying drawings, in which:

Figure 1 shows a schematic partially exploded cross section of a first preferred embodiment of the tire according to the present invention;

Figure 2 shows a view in perspective of a detail in Fig.1; and

Figure 3 shows a schematic partially exploded cross section of a second preferred embodiment of the tire according to the present invention.

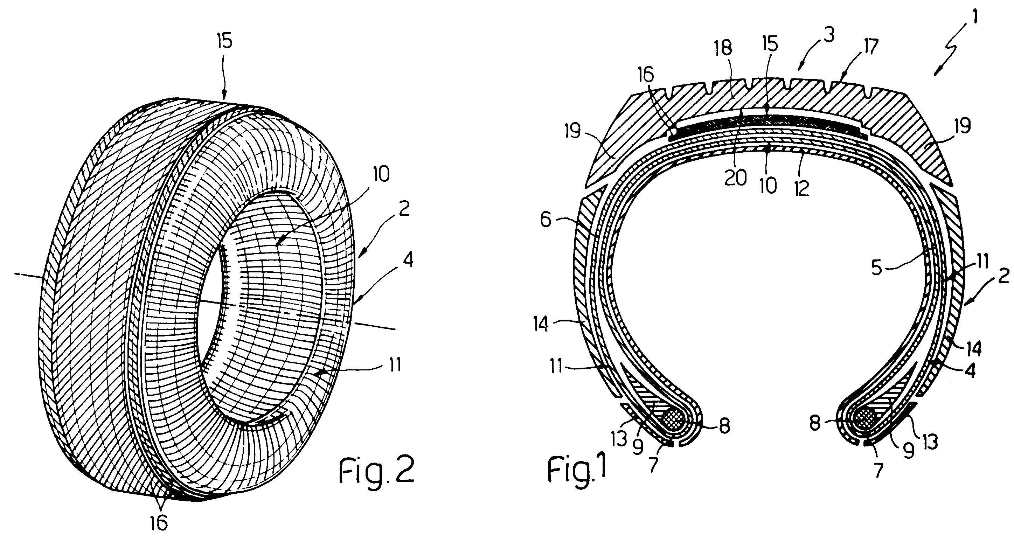

Number 1 in Figure 1 indicates a motor vehicle tire comprising a toroidal inner carcass 2 and an outer annular assembly 3.

Carcass 2 comprises a tubular, substantially toroidal body ply 4 of continuous design (i.e. no joints) defining two superimposed layers 5 and 6, the respective lateral edges of which are rendered integral by respective curved portions 7. Each curved portion 7 extends about a respective annular bead 8 which, together with a respective substantially triangular-section profile 9, forms part of carcass 2 and extends along toroidal body ply 4.

Body ply 4 presents a substantially U-shaped section, and comprises a substantially cylindrical intermediate portion 10, and two annular lateral portions 11, each extending outwards from a respective bead 8 and defined, like intermediate portion 10, by two substantially parallel layers consisting of respective portions of layers 5 and 6.

Carcass 2 also comprises an innerliner 12 covering the inner surface of layer 5; two abrasion strips 13 located on opposite sides of innerliner 12 and each enclosing a respective curved portion 7; and two sidewalls 14, each located outside respective abrasion strip 13.

Annular assembly 3 comprises a substantially cylindrical tread belt 15 consisting of one or more superimposed tread plies 16 and extending outwards of intermediate portion 10 of tubular body ply 4; and a tread 17, which is rigidly connected to carcass 2, and comprises a central, externally-grooved, ground-contacting portion 18 extending about the outer surface of intermediate portion 10 of body ply 4, and two shaped lateral portions 19 located on opposite sides of central portion 18 and contacting respective outer surface portions of lateral portions 11 of body ply 4.

Central portion 18 of tread 17 presents, on its inner surface facing the outer surface of intermediate portion 10 of body ply 4, a groove 20 housing tread belt 15.

By virtue of beads 8 already being housed inside tubular body ply 4 on tire 1 as described above, innerliner 12 and body ply 4 need no longer be turned up for enclosing beads 8, which are thus subjected to substantially no twisting during manufacture of tire 1.

As for the problem of producing a continuous (jointfree) tubular body ply enclosing beads 8, numerous solutions are available. A detailed description of a preferred method of manufacturing such a tubular body ply is given in co-pending Italian Patent Application n.67960-A/90 filed concurrently by the present Applicant and the content of which is incorporated herein in the interest of full disclosure.

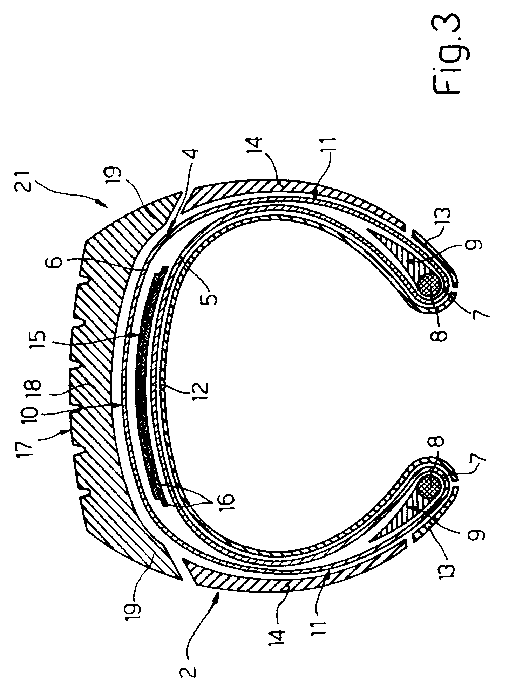

In Figure 3, a tire 21 is shown, which is similar to tire 1, but in which tread belt 15 extends inside intermediate portion 9 of tubular body ply 4.

By virtue of the tubular design of body ply 4 on tire 21 as described above, and the fact that tread belt 15 extends along and is enclosed inside body ply 4, failure or destruction of tread belt 15 due to the centrifugal forces applied to it in no way results in detachment of tread belt 15 from carcass 2, which is thus protected at all times against puncturing, even in the event of tread 17 being detached.

## Claims

1. A motor vehicle tire (1) comprising a substantially U-section inner carcass (2) and an outer annular assembly (3), said carcass (2) comprising a toroidal body ply (4) and two annular lateral beads (8), and said outer assembly (3) comprising an annular tread belt (15) and a tread (17) extending outwards of and about said tread belt (15); characterized by the fact that said toroidal body ply (4) is tubular, and said beads (8) are enclosed inside said tubular body ply (4).

2. A tire as claimed in Claim 1, characterized by the fact that said tubular body ply (4) is continuous, i.e. having no joints.

3. A tire as claimed in Claim 1 or 2, characterized by the fact that said body ply (4) presents a substantially U-shaped section, and comprises a substantially cylindrical intermediate portion (10), and two annular lateral portions (11), each extending outwards of a respective said bead (8); each said portion (10, 11) of said body ply (4) being defined by two superimposed, substantially parallel layers (5, 6).

4. A tire as claimed in any one of the foregoing Claims, characterized by the fact that said tread (17) presents a curved section, said tread belt (15) being located between a central portion (18) of said tread (17) and the intermediate portion (10) of said tubular body ply (4).

5. A tire as claimed in any one of Claims 1 to 3, characterized by the fact that said tread (17) presents a curved section, said tread belt (15) being enclosed inside said body ply (4) together with said beads (8).

6. A tire as claimed in any one of Claims 1 to 4, characterized by the fact that said tread (17) presents a circumferential inner groove (20) housing said tread belt (15).

7. A tire as claimed in any one of Claims 3 to 6, characterized by the fact that said tread belt (15) comprises at least two superimposed annular tread plies (16), and extends along said intermediate portion (10) of said tubular body ply (4).

Fig.1

Fig.2

Fig.3

EP 0 489 354 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 336 964 (A. ALEXEFF)<br>* Column 2, line 23 - column 3, line 8; figures 2,3,4,5 *<br>--- | 1-5,7 | B 60 C 9/02 |
| A | CH-A- 245 257 (E. HEIMANN)<br>--- | | |
| A | DE-A-3 303 595 (J. JANUS)<br>----- | | |

TECHNICAL FIELDS
SEARCHED (Int. Cl.5)

B 60 C

The present search report has been drawn up for all claims

| Place of search | Date of completion of the search | Examiner |
|---|---|---|
| THE HAGUE | 28-02-1992 | SCHMITT L.P. |